# FASCICULE DE BREVET EUROPEEN

(11) **EP 3 296 089 B1**
(45) Date de publication et mention de la délivrance du brevet: **10.01.2024**
(21) Numéro de dépôt: 17183438.5
(22) Date de dépôt: 27.07.2017
(51) Int. Cl.: B29C 70/54, B29C 70/86, B62D 29/00, B29C 37/00, B29C 45/14, B29C 70/34, B29C 70/46, B29K 705/00, B29L 31/30, B62D 25/04

(54) **PROCÉDÉ DE FABRICATION AMÉLIORÉ D'UNE PIÈCE DE STRUCTURE HYBRIDE DE VÉHICULE AUTOMOBILE ET PIÈCE DE STRUCTURE HYBRIDE CORRESPONDANTE**
VERBESSERTES HERSTELLUNGSVERFAHREN EINES HYBRIDSTRUKTURTEILS EINES KRAFTFAHRZEUGS, UND ENTSPRECHENDES HYBRIDSTRUKTURTEIL
IMPROVED METHOD FOR MANUFACTURING A HYBRID STRUCTURAL PART OF A MOTOR VEHICLE AND CORRESPONDING HYBRID STRUCTURAL PART

(30) Priorité: 16.09.2016 FR 1658669
(43) Date de publication de la demande: 21.03.2018
(73) Titulaire: Compagnie Plastic Omnium, 69007 Lyon (FR)
(72) Inventeur: ROCHEBLAVE, Laurent, 69100 VILLEURBANNE (FR)
(74) Mandataire: Andrieux, Benoît

(56) Documents cités:
- FR-A1- 3 030 356
- GB-A- 2 238 977
- US-A1- 2010 288 429

## Description

L'invention a pour objet un procédé de fabrication d'une pièce de structure hybride de véhicule automobile formée par l'assemblage de plusieurs matériaux différents, tels que des éléments métalliques, des matériaux polymères et des fibres de renfort, dans le but de conférer à la pièce des caractéristiques mécaniques particulières.

En effet, certains éléments de structure d'un véhicule automobile sont particulièrement sollicités lors d'un choc. Ils doivent pouvoir apporter la rigidité et la résistance nécessaire pour soutenir les efforts, absorber une partie de l'énergie afin de préserver l'intégrité du véhicule, et assurer la sécurité des passagers. C'est le cas par exemple de pièces de structure telles que le pied milieu, le longeron extérieur longitudinal, la traverse de pavillon, la poutre de choc ou, potentiellement, de tout autre élément structurel du véhicule.

Ces éléments de structure doivent également être suffisamment résistants pour supporter localement diverses fonctions mécaniques. A titre d'exemple, le pied milieu automobile, qui est fortement sollicité lors d'un choc latéral, doit aussi assurer à la fois le maintien de la porte arrière via des charnières et la tenue de la porte avant via le système de fermeture de celle-ci.

Les pièces de structures hybrides permettent également, à résistance mécanique égale, de faire un gain de poids substantiel de l'ordre de 30%, par rapport à des pièces métalliques conventionnelles, tout en améliorant les propriétés d'amortissement des chocs. Le document FR 3 030 356 A1 divulgue un procédé de fabrication d'une partie de structure hybride de voiture, comprenant la formation d'un élément hybride par mise en forme d'une nappe de matériau composite sur une nappe de matériau métallique elle-même mise en forme, et la réalisation d'un élément de rigidification par moulage de l'élément hybride à l'aide d'un matériau polymère pour former la partie de structure.

La publication EP1 550 604 propose un procédé de fabrication d'une pièce de structure hybride dans lequel on met en forme un élément de structure métallique préalablement enduit d'un revêtement de surface réactivable à chaud. On rapporte ensuite par surmoulage une matière thermoplastique formant des nervures sur la face de l'élément de structure métallique comportant le revêtement de surface. Cette pièce de structure hybride manque toutefois de résistance au choc en ce qu'elle ne comporte pas de moyens de renforcement comprenant des fibres.

On connaît aussi le cas d'une structure hybride comprenant un matériau composite, et des moyens de renforcement formés d'une couche de fibres imprégnées dans une matrice polymère et formant des bandes de renfort. Cette couche de fibres est en règle générale formée de fibres unidirectionnelles et comprend éventuellement une ou plusieurs couches supplémentaires de fibres tissées. La couche de matériau composite est mise en forme, de préférence par estampage à chaud, directement dans l'élément de structure métallique préformé, après l'application sur l'élément métallique d'une couche intercalaire de matériau de liaison. Les bandes de renfort sont alors disposées sur tout ou partie de la face de l'élément de structure métallique supportant la couche de matériau composite. Les éléments de rigidification, en forme de nervures, sont ensuite réalisés par surmoulage d'un matériau polymère thermoplastique ou thermodurcissable, de préférence dans le même moule que celui utilisé à l'étape d'estampage. Le matériau polymère recouvre les bandes de renfort et une partie des espaces de l'élément de structure métallique laissés libres par les bandes de renfort. Ce procédé permet d'obtenir des pièces de grande qualité. Toutefois, il est nécessaire de prendre de nombreuses précautions pour éviter que les bandes de renfort ne soient déplacées pendant le surmoulage du matériau polymère lorsque cette opération s'effectue par injection. En particulier lorsque les bandes de renfort ne recouvrent que très partiellement la surface de la structure métallique.

L'invention a pour objet de proposer un procédé de réalisation simplifié d'une pièce de structure hybride, alternatif aux procédés ci-dessus, et permettant de réduire les coûts de réalisation de la structure hybride tout en assurant une bonne précision du positionnement des bandes de renfort et de la nappe composite.

Le procédé de fabrication d'une pièce de structure hybride de véhicule automobile selon l'invention comprend les caractéristiques de la revendication 1.

Les bandes de renfort sont positionnées sur la nappe composite et pré solidarisée par un moyen quelconque avec cette dernière, pour former une nappe de renfort complexe avant l'introduction de ladite nappe de renfort complexe dans le moule. La position relative de ces différentes nappes est donc précise. Par ailleurs, il a été vérifié expérimentalement que le maintien en position de la nappe complexe dans le moule pendant l'étape d'estampage, au cours de laquelle ladite nappe complexe se déforme, ne pose pas de problèmes majeurs en raison en particulier de la grande surface recouverte par cette nappe complexe.

Le procédé selon l'invention peut aussi comprendre isolément, ou en combinaison, les caractéristiques suivantes :
- Les matrices polymères de la nappe composite et des bandes de renfort sont des matériaux thermoplastiques compatibles et, au cours de l'étape b, on porte la surface de ladite nappe composite à une température proche de la température de fusion du matériau thermoplastique, et la surface des bandes de renfort à une température proche de la température de fusion de la matrice polymère enrobant les fibres continues, de sorte que la nappe composite et les bandes de renfort sont liées par soudure.
- A l'étape b, on solidarise les bandes de renfort sur la nappe composite par des moyens mécaniques tels que des aiguilles, des agrafes, ou par déformation localisée de la nappe.
- Au cours de l'étape c, on porte ladite nappe de renfort complexe à une température supérieure à la température de transition vitreuse Tg et proche de la température de fusion de la matrice polymère de la nappe composite.
- Au cours de l'étape c, on porte la pièce de métal à une température proche de la température du moule comprise entre 70°C et 160°C et préférentiellement entre 80°C et 140°C.
- La bande de renfort comporte des fibres continues unidirectionnelles.
- Les fibres de la bande de renfort sont tissées.
- Des bandes de renfort sont superposées partiellement ou en totalité les unes sur les autres.
- La nappe composite comporte des fibres continues tissées.
- La nappe composite comporte des fibres courtes entremêlées non tissées.
- Lesdites fibres sont choisies parmi les fibres de verre, les fibres de carbone, les fibres de basalte, les fibres métalliques ou encore les fibres aramides.
- A l'issue de l'étape d, on procède à une étape e, au cours de laquelle on surmoule par injection ou par thermocompression, un matériau thermoplastique ou thermodurcissable.
- Le matériau thermoplastique ou thermodurcissable est surmoulé sur la même face de la pièce de métal que celle sur laquelle a été déposée la nappe de renfort complexe.
- Le matériau thermoplastique ou thermodurcissable est surmoulé sur la face opposée à la face de la pièce sur laquelle a été déposée la nappe de renfort complexe.
- Le matériau thermoplastique ou thermodurcissable surmoulé est un matériau chargé de fibres coupées.
- Le matériau thermoplastique ou thermodurcissable surmoulé sur une des faces de la pièce de métal forme des nervures de renforcement.
- Préalablement à la réalisation de l'étape c, on recouvre la face de la pièce de métal destinée à recevoir la nappe de renfort complexe, et éventuellement la face destinée à recevoir la couche de matériau thermoplastique ou thermodurcissable, d'une couche de liaison.
- Préalablement à la réalisation de l'étape a, on procède à un traitement mécanique de la feuille de métal de manière à créer des aspérités de surface sur les faces destinées à recevoir la nappe de renfort complexe ou la couche de matériau thermoplastique ou thermodurcissable.
- Le moule comporte des aiguilles traversant le renfort complexe avantageusement positionnées pour maintenir ledit renfort complexe en position pendant l'étape c.

La divulgation concerne également une pièce de structure hybride de véhicule automobile, pouvant être obtenue en mettant en oeuvre le procédé selon les caractéristiques précédentes en ce qu'elle comprend une pièce de métal mise en forme, sur une face de laquelle adhère une nappe composite formée de fibres imprégnées dans une matrice polymère thermoplastique sur laquelle sont superposées une ou plusieurs bandes de renfort formées de fibres continues enrobées dans une matrice polymère.

L'invention sera mieux comprise à la lecture des figures annexées, qui sont fournies à titre d'exemples et ne présentent aucun caractère limitatif, dans lesquelles :
- La figure 1 représente une vue schématique d'une structure hybride de véhicule automobile telle qu'un pied milieu.
- La figure 2 est une coupe schématique de la structure en A-A.
- La figure 3 est une coupe schématique de la pièce de métal obtenue à l'étape a.
- La figure 4 est une vue en coupe schématique de la bande de renfort.
- La figure 5 est une vue en coupe schématique de la nappe composite.
- La figure 6 est une vue en coupe schématique de la nappe de renfort complexe obtenue à l'étape b.
- Les figures 7, 8 et 9 sont des vues schématiques des étapes c et d pour la réalisation d'une pièce de structure hybride selon le premier mode de mise en oeuvre de l'invention.
- La figure 10 est une vue en coupe schématique de la structure hybride (identique pour rappel à celle de la figure 2).
- Les figures 11, 12 et 13 sont des vues schématiques des étapes c et d pour la réalisation d'une pièce de structure hybride.
- La figure 14 est une vue en coupe schématique selon A-A de la structure hybride.
- La figure 15 est une vue schématique de l'étape e pour la réalisation d'une pièce de structure hybride selon un deuxième mode de mise en oeuvre de l'invention.
- La figure 16 est une vue en coupe schématique selon B-B de la structure hybride obtenue selon le deuxième mode de mise en oeuvre de l'invention.
- Les figures 17, 18 et 19 sont des vues en coupe de la nappe de renfort complexe et de la pièce de métal, et de leur assemblage, selon un troisième mode de mise en oeuvre de l'invention.

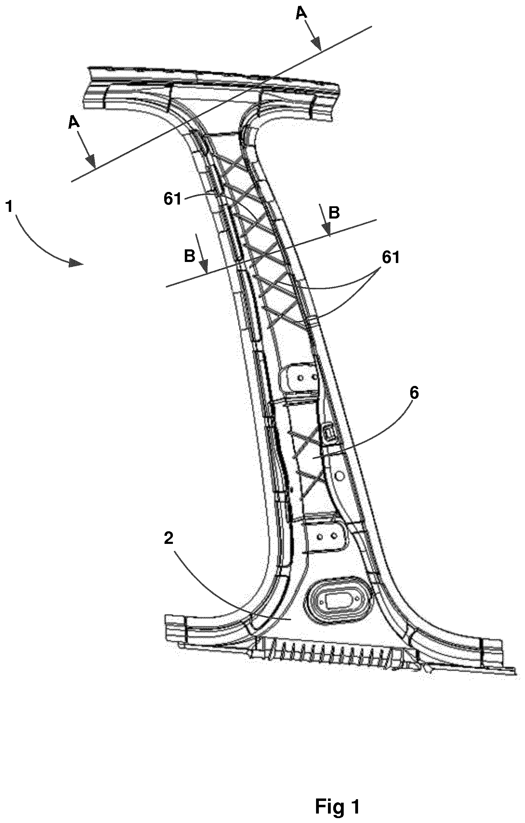

La pièce de structure hybride 1 représentée à la figure 1 est un pied milieu de véhicule automobile, et comprend une pièce de métal 2 mise en forme, sur laquelle est surmoulée une couche de matériau thermoplastique ou thermodurcissable 6. Des nervures 61 en matériau thermoplastique ou thermodurcissable, sont disposées localement pour renforcer la structure de la pièce de métal 2 en augmentant l'inertie totale de la structure hybride. Lorsque la pièce de métal 2 présente une concavité, en forme de U par exemple, les nervures 61 en matériau thermoplastique ou thermodurcissable sont avantageusement disposées à l'intérieur de la concavité, de manière à limiter une ouverture ou une fermeture importante de la concavité, ou des deux ailes du U, sous l'effet d'un choc. Les nervures 61 peuvent avoir une orientation longitudinale ou transversale ou encore former des croisillons comme cela est illustré à la figure 1. Les nappes de renfort ne sont pas visibles sur la figure 1.

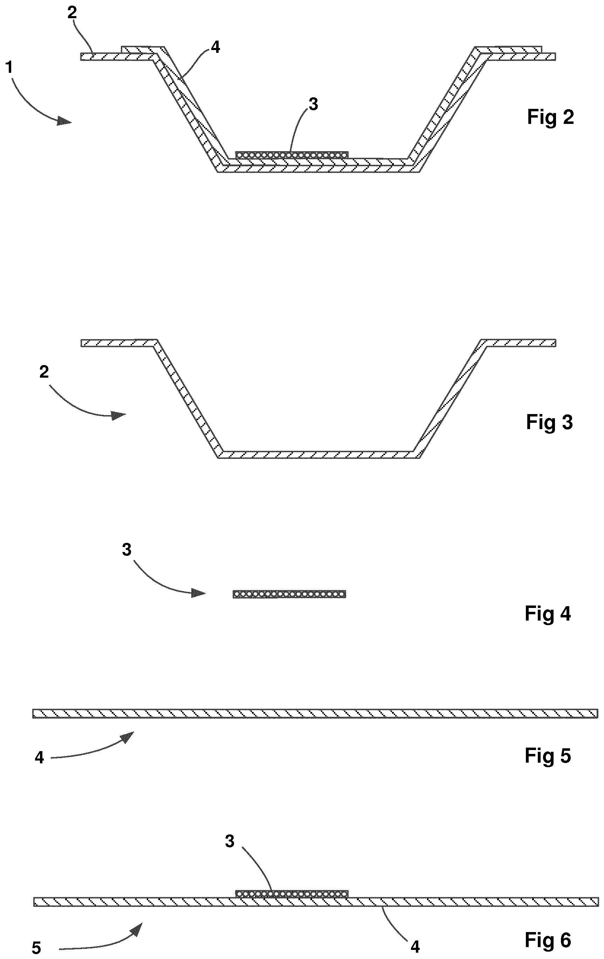

La figure 2 représente la coupe selon A-A de la pièce de structure hybride formée de l'assemblage d'une pièce de métal 2, d'une nappe composite 4 et d'une bande de renfort 3.

La mise en forme, à l'étape a, de la nappe de métal servant à réaliser la pièce de métal 2, illustrée à la figure 3, se fait de préférence par emboutissage, à froid ou à chaud. La nappe de métal se présente sous la forme d'une tôle dont l'épaisseur est comprise entre 0,1 mm à 1,5 mm et plus généralement entre 0,5 mm et 1 mm. Cette nappe de métal peut indifféremment être en aluminium, en magnésium, en titane, ou formée d'un alliage d'un ou de plusieurs de ces métaux. Plus couramment, on choisira un alliage à base de fer, par exemple un acier ou un acier inoxydable, et de préférence un matériau métallique emboutissable à froid.

L'étape b consiste à assembler en les superposant la bande de renfort 3, telle qu'illustrée schématiquement à la figure 4, avec une nappe composite 4, telle qu'illustrée de manière schématique à la figure 5, pour former une nappe de renfort complexe 5, illustrée à la figure 6.

Les fibres continues de la bande de renfort 3 sont enrobées dans une matrice polymère. Le choix de la fibre s'opère parmi les fibres de renforcement les plus courantes telles que les fibres de verre, les fibres de carbone, les fibres de basalte, les fibres métalliques, les fibres aramides. Ces fibres peuvent être des fibres monobrins ou plus généralement des fils toronnés de manière à améliorer la résistance mécanique de la pièce.

Ces fibres continues peuvent être toutes dirigées dans une même direction, et on parlera alors de fibres de renfort unidirectionnelles, qui sont parallèles entre elles, et qui sont généralement alignées par rapport à la direction principale de la pièce de structure hybride 1 à réaliser. On pourra aussi utiliser des bandes de renfort 3 comprenant des fibres continues tissées.

Le matériau polymère enrobant les bandes de renfort 3 ou la nappe composite 4, de préférence thermoplastique, peut être choisi parmi les polyamides aliphatiques (PA), les polyphtalamides (PPA), le polybutylène téréphtalate (PBT), le polyéthylène téréphtalate (PET), les polycarbonates (PC), voire le polypropylène et leurs mélanges. A titre d'exemple, on peut utiliser du polyamide 66 (PA66), ou encore du polyamide 6 (PA6).

Le choix du nombre, de la position et de l'orientation des fibres continues des bandes de renfort 3 se fait en fonction de la localisation des efforts encaissés par la pièce hybride lors d'un choc, et résultent des calculs de résistance des matériaux réalisés pendant la phase d'étude. Les fibres continues unidirectionnelles formant chacune des couches des bandes de renfort 3, peuvent être orientées selon une même direction ou former entre elles des angles déterminés. Lorsque cela s'avère nécessaire, on pourra également combiner une ou plusieurs couches de fibres continues unidirectionnelles et une ou plusieurs couches de fibres continues tissées. Les bandes de renfort ainsi assemblées peuvent présenter une épaisseur allant de 3 mm à 6 mm.

On remarquera ici qu'il est possible de disposer une ou plusieurs bandes de renfort 3. Ces bandes de renfort 3 peuvent être totalement ou partiellement superposées, ou encore totalement disjointes entre elles. On entend ici que les bandes de renfort se recouvrent les unes sur les autres sur la totalité de leur surface ou sur une partie seulement de leurs surfaces respectives. Elles peuvent s'étendre surtout ou partie de la surface de la pièce de structure hybride.

La nappe composite 4 comporte des fibres imprégnées dans une matrice polymère thermoplastique. Cette matrice peut être de nature identique ou être différente de la matrice polymère dans laquelle sont enrobées les fibres des bandes de renfort. Elle peut être réalisée par des procédés connus tels que les procédés RTM (Resin Transfer Molding : Moulage par transfert de résine), éventuellement à haute pression, par compression (par exemple par calandrage), sur des presses double-bande, par pultrusion ou tout autre procédé adapté, par exemple les procédés d'imprégnation par un monomère en phase de polymérisation.

Une telle nappe composite 4, outre ses propriétés de liaison avec la pièce de métal 2, apporte également à la pièce de structure hybride finale 1 une capacité d'absorption d'énergie élevée, améliorant ainsi sa tenue aux chocs. En effet, la nappe de matériau composite 4 combine de nombreux modes de ruine lorsqu'elle est soumise à de fortes déformations, chaque mode de ruine absorbant de l'énergie.

Avantageusement, la nappe composite 4 peut comprendre une ou plusieurs couches de fibres courtes ou de fibres longues tissées ou non, de nature identique ou différente aux fibres composant les bandes de renfort, lesdites fibres étant choisies, ici encore, parmi les fibres de verre, les fibres de carbone, les fibres de basalte, les fibres métalliques ou encore les fibres aramides. Le polymère thermoplastique enrobant les fibres de la nappe composite est également choisi parmi les matériaux polymères, cités ci-dessus, et pour son aptitude à adhérer à la surface de la pièce de métal 2. Ce matériau polymère thermoplastique doit être également compatible avec le matériau polymère formant les bandes de renfort 3 de sorte que, à 'issue de l'étape d, les matériaux de ces nappes adhèrent fortement les uns sur les autres.

La réalisation de la nappe de renfort complexe 5 à l'étape b, se fait en superposant la bande de renfort 3 sur la nappe composite 4. La position des nappes de renfort est ajustée pour tenir compte des déformations de la nappe complexe lors de l'opération d'estampage ou de thermocompression. Cette opération est d'une grande précision, en particulier lorsqu'elle est réalisée par un robot. Aussi, toutes les précautions sont prises pour maintenir ces positions relatives tout au long des étapes suivantes du procédé de sorte que la position des nappes sur la pièce hybride est également très précise.

De préférence, on cherchera à faire adhérer les bandes de renfort 3 sur la nappe composite 4. Cette opération peut se réaliser à chaud en portant la face de ladite nappe composite 4, destinée à recevoir la bande de renfort 3, à une température proche de la température de fusion du matériau thermoplastique, et la surface des bandes de renfort 3 à une température proche de la température de fusion de la matrice polymère enrobant les fibres continues, de sorte que la face de la nappe composite et la face des bandes de renfort placées en vis-à-vis sont liées par soudure. Cette opération est particulièrement adaptée à l'utilisation des dispositifs de soudure miroir permettant de chauffer localement les parties de chacune des nappes destinées à venir en contact.

Selon l'invention le procédé consiste à utiliser, au cours des étapes c et d, des aiguilles judicieusement disposées sur le robot de préhension et de chargement ainsi que dans le moule, et qui traversent les couches formées par les bandes de renfort 3 et la nappe composite 4.

A l'issue de l'étape b, on obtient une nappe de renfort complexe 5 formée de l'assemblage des bandes de renfort 3 et de la nappe composite 4.

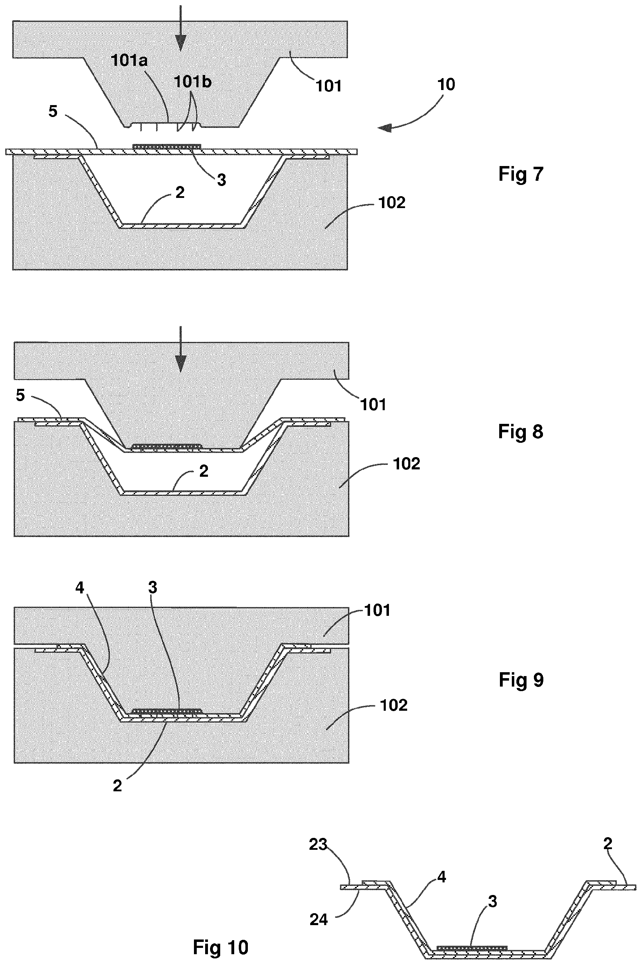

La figure 7 permet d'illustrer l'étape c au cours de laquelle la nappe de renfort complexe est introduite dans un moule 10, préférentiellement et pour des raisons de précision, à l'aide d'un robot (non représenté).

Le moule 10 comprend une partie fixe 102, et une partie mobile 101 relativement à la partie fixe 102.

La pièce de métal 2 est disposée à titre d'exemple sur la partie fixe 102.

Préalablement à son introduction dans le moule, la nappe de renfort complexe 5 est chauffée à une température suffisante pour permettre son ramollissement et son adhésion à la pièce de métal.

Lorsque le matériau de la nappe de renfort complexe est de type thermoplastique on porte ladite nappe 5, dans un four, à une température supérieure à la température de transition vitreuse Tg, et proche de la température de fusion, de sorte qu'elle se ramollit fortement.

De même, la pièce de métal 2 peut être portée à une température proche de la température du moule.

La nappe de renfort complexe 5 est alors disposée avec précision sur le dessus de la partie fixe 102 au cours de l'étape c. Comme cela a été évoqué ci-dessus, la surface du moule 101 comporte de aiguilles 101b destinées à pénétrer dans l'épaisseur de la nappe de renfort complexe 5 pour maintenir les positions relatives des bandes de renfort 3 et de la nappe composite 4.

On remarquera également la présence d'un léger relief en creux 101a sur la partie du moule 101 destinée à venir en contact avec la bande de renfort au niveau de la surélévation formée par la bande de renfort 3 sur la surface de la nappe de renfort complexe 5. Ce relief particulier, dont le profil est adapté à la forme de la surépaisseur, permet de faciliter le positionnement de la nappe de renfort complexe 5 et son maintien en position pendant l'étape d.

Les figures 8 et 9 illustrent la cinématique du moule au cours de l'étape d. La partie mobile 101 est abaissée de sorte que la nappe de renfort complexe 5 est déformée (voir figure 9) jusqu'à ce que ladite nappe vienne en contact avec la pièce de métal 2 sur laquelle elle est pressée fortement.

A titre d'exemple, la pression appliquée pendant l'étape d'estampage ou de thermocompression peut aller de 80 à 300 bars, de préférence de 100 à 200 bars. Pendant l'application de la pression, le moule peut éventuellement être maintenu à une température comprise entre 70°C et 160°C, de préférence comprise entre 80°C et 140°C,.

De manière à ce que ladite nappe de renfort complexe 5 épouse au mieux en se déformant la surface de la pièce de métal 2, on veillera à ce que le profil de la pièce de métal soit peu tourmenté.

A l'issue de l'étape d on extrait la pièce du moule pour obtenir la pièce de la figure 2 illustrée pour rappel à la figure 10. Selon cette première alternative de mise en oeuvre de l'invention, la nappe de renfort complexe 5 est disposée du côté de la face concave 23 de la pièce de métal.

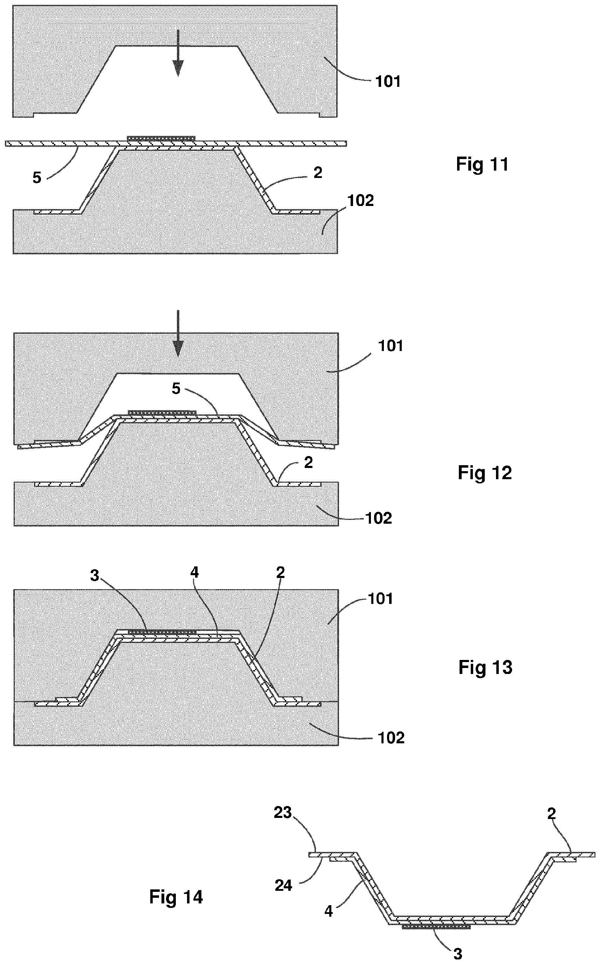

Les figures 11, 12 et 13 illustrent un procédé ne faisant pas partie de l'invention dans laquelle la nappe de renfort complexe 5 est disposée du côté convexe 24 de la pièce de métal 2.

Après avoir disposé à l'étape c la pièce de métal 2 sur la partie fixe du moule 102, de sorte que la face convexe de la pièce de métal soit dirigée vers la partie mobile, la nappe de renfort complexe 5 est introduite en présentant la face formée par la nappe composite 4 du côté de la pièce de métal, comme cela est illustré à la figure 11.

A l'étape d, en référence aux figures 12 et 13, le moule est refermé de sorte que la nappe de renfort complexe 5 est estampée sur la face convexe 24 de la pièce de métal 2.

La pièce de structure hybride obtenue à l'issue de l'étape d est illustrée à la figure 14.

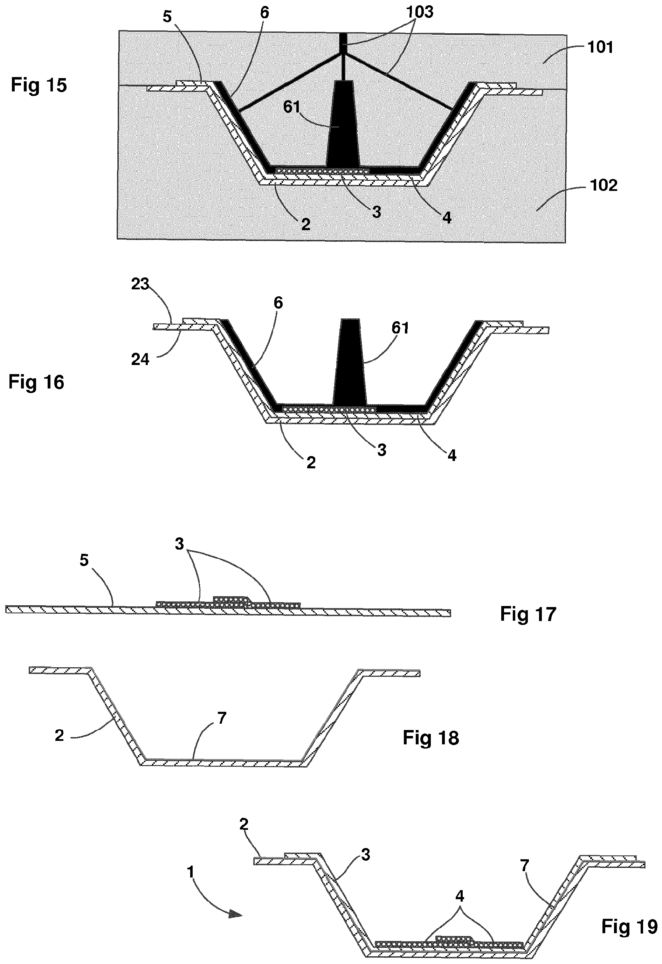

Les figures 15 et 16 permettent d'illustrer un deuxième mode de réalisation de l'invention dans lequel, à l'issue de l'étape d, on procède à une étape e au cours de laquelle on surmoule par injection ou par thermocompression un matériau thermoplastique ou thermodurcissable 6 de manière à former des nervures de renforcement 61. Ces nervures de renforcement sont situées en règle générale du côté de la face concave 24 de la pièce de métal 2.

Compte tenu de ce qui a été dit précédemment, le matériau thermoplastique ou thermodurcissable peut être surmoulé sur la même face 23 que celle sur laquelle a été déposée la nappe de renfort complexe 5, ou sur la face opposée 24.

Le surmoulage de la couche de matériau thermoplastique 6, à l'étape e, se fait de préférence par injection dans le même moule dans lequel a été réalisée l'étape d du procédé et au cours de laquelle la nappe de renfort complexe 5 a été estampée sur la pièce de métal. Le moule 10 doit alors être adapté, par exemple en prévoyant des tiroirs rétractables, pour libérer le volume destiné à être occupé par le matériau thermoplastique ou thermodurcissable 6. Lorsque le matériau formant la couche 6 est un matériau de type thermodurcissable ou choisira préférentiellement un procédé par thermocompression

De manière à alléger le bilan thermique il est préférable de procéder au surmoulage de la couche 6 immédiatement après la fin de l'étape e, lorsque la nappe de renfort complexe et la pièce de métal sont à une température encore suffisamment élevée pour autoriser une liaison par soudure entre la nappe de renfort complexe 5 et la couche surmoulée 6.

La couche surmoulée 6 de matériau thermoplastique ou thermodurcissable recouvre tout ou partie de la surface de la pièce de métal 2.

Avantageusement, le matériau thermoplastique ou thermodurcissable utilisée pour la couche surmoulée 6 peut comprendre des fibres courtes disposées de manière aléatoire, afin d'obtenir des éléments de rigidification plus résistants. Lesdites fibres sont choisies, ici encore, parmi les fibres de verre, les fibres de carbone, les fibres de basalte, des fibres métalliques, les fibres aramides.

Le matériau polymère thermodurcissable peut être une résine polyester, vinylester, epoxy, polyuréthane ou leur mélange.

De préférence on choisira pour la couche surmoulée une matrice polymère identique ou compatible avec le matériau formant la nappe composite 4 et les nappes de renfort 3, dans la mesure où ces composants sont destinés à être assemblés pour former une pièce de résistance mécanique unique.

Encore plus préférentiellement, on choisira pour la matrice polymère servant à réaliser la couche 6 et les nervures de renforcement 61, pour la matrice polymère enrobant les fibres de la bande de renfort 3, et pour la matrice polymère de la nappe composite 4, des matériaux thermoplastiques compatibles de manière à autoriser une jonction par soudage entre lesdites matrices polymères de ces trois composants. A titre d'exemple, lorsque le matériau de la nappe complexe est de type Polyamide PA (PA6, PA66, PA12, PA11) on pourra sélectionner pour la couche injectée un matériau de type Polyamide PA (PA6, PA66, PA12, PA11).

La figure 18 illustre un troisième mode de réalisation de l'invention, dans lequel, préalablement à son introduction dans le moule au cours de l'étape c, la pièce de métal est enduite d'une couche de liaison sur la face (23 ou 24) destinée à recevoir la nappe de renfort complexe 5, et si nécessaire sur la face 23 destinée à recevoir la couche surmoulée 6, dans le but de renforcer la liaison entre la pièce de métal et les matrices polymères des éléments de renfort 3, 4, 6. Le matériau de liaison 7 peut être du type « thermoactivable » lorsque la liaison avec les matrices polymères s'opère dans des conditions prédéterminées de température. L'activation de ce matériau de liaison 7 peut utilement se faire à la température et à la pression de moulage du matériau formant la couche surmoulée 6. Ce matériau de liaison 7 se présente sous la forme d'une simple couche de matériau polymère compatible chimiquement avec le matériau formant la nappe de renfort complexe 5 et/ou la couche surmoulée 6.

Le matériau de liaison 7 peut être un matériau connu sous l'appellation anglaise « hot-melt », et être choisi parmi les matériaux à base de copoly-ester ou à base de copolyamide, ou encore parmi les thermoplastiques élastomères à base de polyoléfine. A titre d'exemple non limitatif, ces matériaux sont commercialisés sous les appellations EMS Griltex^{®} CE20, EMS Griltex ^{®}CT100, Nolax Cox^{®} 391.

Le matériau de liaison 7 peut aussi être un matériau apte à réticuler. Pour ce type de matériau, un ramollissement ultérieur n'est pas possible, notamment lors d'une exposition à une température prédéterminée pendant une durée donnée (avantageusement celle des conditions d'injection de la couche surmoulée ou d'un cycle de cataphorèse et peinture sur une ligne constructeur). Cela présente l'avantage de solidariser au moins partiellement la couche surmoulée 6 à la pièce de métal 2 avec un niveau de tenue permettant ensuite de passer dans toutes les étapes de chauffe de la chaîne de fabrication du constructeur automobile.

Le matériau de liaison réticulable peut être choisi parmi les matériaux à base de co-polyamide, comprenant éventuellement un isocyanate, un époxyde, voire une polyoléfine. A titre d'exemple non limitatif, ces matériaux sont commercialisés sous les appellations Evonik^{®}, Vestamelt^{®} X1333-P1, Nolax^{®} HCM 555, Lohmann DuploTEC^{®}, Tesa HAF^{®}.

La dépose de cette couche de matériau de liaison 7 se fait en règle générale par laminage ou par simple projection d'une couche de très faible épaisseur, préférentiellement, avant l'étape a, sur la tôle destinée à former la pièce de métal 2.

La mise en oeuvre des étapes a, b, c, d et éventuellement e du procédé se déroule de manière identique à ce qui a été décrit ci-dessus.

A titre d'illustration, la nappe de renfort complexe 5 de la figure 17, et la pièce hybride de la figure 19 formée de l'assemblage de la nappe de la figure 17 et de la pièce de métal de la figure 18, comportent deux bandes de renfort 3.

Une variante de réalisation du troisième mode de réalisation de l'invention (non illustrée) et permettant de renforcer la liaison entre la nappe de renfort complexe 5 et/ou la couche surmoulée 7 et la pièce de métal 2, consiste à traiter mécaniquement la surface de la pièce de métal 2.

Pour ce faire, on réalise des aspérités de surface sur la tôle métallique destinée à former la pièce de métal 2, avant l'étape a, ou sur la surface de la pièce de métal 2 elle-même. Ces aspérités de surface peuvent être obtenues par traitement laser de manière à produire une texturation de la surface, par ponçage, ou par tout autre moyen susceptible de créer des altérations superficielles.

Il va de soi, qu'il est tout à fait possible de combiner deux à deux chacun des modes de mise en oeuvre de l'invention ou de les mettre en oeuvre simultanément.

Enfin, la divulgation concerne une pièce de structure hybride 1 de véhicule automobile, pouvant être obtenue en mettant en oeuvre le procédé selon les caractéristiques précédentes. Ladite pièce de structure hybride comprend une pièce de métal mise en forme, sur une face (23, 24) de laquelle adhère une nappe composite (4) formée de fibres imprégnées dans une matrice polymère thermoplastique. Des bandes de renfort (3) formées de fibres continues enrobées dans une matrice polymère sont superposées sur la face de la nappe composite (4) opposée à la face adhérant à la pièce de métal (2).

### NOMENCLATURE

- 1: Pièce de structure hybride.
- 2: Pièce de métal.
- 23: Face de la pièce de métal comportant des nervures de renforcement.
- 24: Face de la pièce de métal opposée à la face comportant des nervures de renforcement.
- 3: Bande de renfort formée de fibres continues enrobée dans une matrice polymère.
- 4: Nappe composite formée de fibres imprégnées dans une matrice polymère thermoplastique.
- 5: Nappe de renfort complexe.
- 6: Couche surmoulée formée d'un matériau thermoplastique ou thermodurcissable.
- 61: Nervures de renforcement en matériau thermoplastique ou thermodurcissable.
- 7: Couche de liaison formée d'un matériau polymère.
- 10: Moule.
- 101: Partie supérieure du moule.
- 101a: Relief en creux.
- 102b: Aiguilles de maintien.
- 102: Partie inférieure du moule.
- 103: Canaux d'injection.

## Revendications

1. Procédé de fabrication d'une pièce de structure hybride (1) de véhicule automobile comprenant les étapes au cours desquelles :
- étape a : on met en forme une nappe de matériau métallique pour former une pièce de métal (2),
- étape b : on solidarise une ou plusieurs bandes de renfort (3) formées de fibres continues enrobées dans une matrice polymère avec une nappe composite (4) formée de fibres imprégnées dans une matrice polymère thermoplastique, pour créer une nappe de renfort complexe (5),
- étape c : on dépose la pièce de métal (2) et la nappe de renfort complexe (5) dans un moule (10), en arrangeant la nappe de renfort complexe (5) de sorte que la nappe composite (4) est disposée pour venir en contact avec une des faces (23, 24) de la pièce de métal (2).
- étape d : on ferme le moule pour conformer par estampage et faire adhérer le renfort complexe (5) sur ladite face de la pièce de métal (2),
**caractérisé en ce que** le procédé est tel qu'il consiste à utiliser, au cours des étapes c et d, des aiguilles judicieusement disposées sur un robot de préhension et de chargement ainsi que dans le moule, et qui traversent les couches formées par les bandes de renfort 3 et la nappe composite 4.

2. Procédé de fabrication selon la revendication 1, dans lequel les matrices polymères de la nappe composite (4) et des bandes de renfort (3) sont des matériaux thermoplastiques compatibles, et dans lequel au cours de l'étape b, on porte la surface de ladite nappe composite (4) à une température proche de la température de fusion du matériau thermoplastique, et la surface des bandes de renfort (3) à une température proche de la température de fusion de la matrice polymère enrobant les fibres, de sorte que la nappe composite (4) et les bandes de renfort (3) sont liées par soudure.

3. Procédé de fabrication selon la revendication 1, dans lequel, à l'étape b, on solidarise les bandes de renfort (3) sur la nappe composite (4) par des moyens mécaniques tels que des aiguilles (101b), des agrafes, ou par déformation localisée de la nappe.

4. Procédé de fabrication selon l'une quelconque des revendications 1 à 3, dans lequel, au cours de l'étape c, on porte ladite nappe de renfort complexe (5) à une température supérieure à la température de transition vitreuse Tg et proche de la température de fusion de la matrice polymère de la nappe composite (4).

5. Procédé de fabrication selon l'une quelconque des revendications 1 à 4, dans lequel, au cours de l'étape c, on porte la pièce de métal (2) à une température proche de la température du moule comprise entre 70°C et 160°C et préférentiellement entre 80°C et 140°C.

6. Procédé de fabrication selon l'une quelconque des revendications 1 à 5, dans lequel la bande de renfort (3) comporte des fibres continues unidirectionnelles.

7. Procédé de fabrication selon la revendication 6, dans lequel les fibres de la bande de renfort sont tissées.

8. Procédé de fabrication selon l'une quelconque des revendications 1 à 7, dans lequel des bandes de renfort (3) sont superposées partiellement ou en totalité les unes sur les autres.

9. Procédé de fabrication selon l'une quelconque des revendications 1 à 8, dans lequel la nappe composite (4) comporte des fibres continues tissées.

10. Procédé de fabrication selon l'une quelconque des revendications 1 à 8, dans lequel la nappe composite (4) comporte des fibres courtes entremêlées non tissées.

11. Procédé de fabrication selon l'une quelconque des revendications 7 à 10, dans lequel, lesdites fibres sont choisies parmi les fibres de verre, les fibres de carbone, les fibres de basalte, les fibres métalliques ou encore les fibres aramides.

12. Procédé de fabrication selon l'une quelconque des revendications 1 à 11, dans lequel à l'issue de l'étape d, on procède à une étape e, au cours de laquelle on surmoule par injection, ou par thermocompression un matériau thermoplastique ou thermodurcissable (6).

13. Procédé de fabrication selon la revendication 12 dans lequel le matériau thermoplastique ou thermodurcissable (6) est surmoulé sur la même face (23) de la pièce de métal (2) que celle sur laquelle a été déposée la nappe de renfort complexe (5).

14. Procédé de fabrication selon la revendication 12, dans lequel le matériau thermoplastique ou thermodurcissable (6) est surmoulé sur la face opposée (23) à la face (24) de la pièce sur laquelle a été déposée la nappe de renfort complexe (5).

15. Procédé de fabrication selon l'une quelconque des revendications 12 à 14, dans lequel le matériau thermoplastique ou thermodurcissable (6) surmoulé est un matériau chargé de fibres coupées.

16. Procédé de fabrication selon l'une quelconque des revendications 12 à 15, dans lequel le matériau thermoplastique ou thermodurcissable (6) surmoulé sur une des faces (23) de la pièce de métal (2) forme des nervures de renforcement (61).

17. Procédé de fabrication selon l'une quelconque des revendications 1 à 16, dans lequel, préalablement à la réalisation de l'étape c, on recouvre la face de la pièce de métal (2) destinée à recevoir la nappe de renfort complexe (5) d'une couche de liaison (7).

18. Procédé de fabrication selon l'une quelconque des revendications 12 à 17, dans lequel, préalablement à la réalisation de l'étape c, on recouvre la face de la pièce de métal (2) destinée à recevoir la nappe de renfort complexe (5), et la face destinée à recevoir la couche de matériau thermoplastique ou thermodurcissable (6), d'une couche de liaison (7).

19. Procédé de fabrication selon l'une des revendications 1 à 16, dans lequel, préalablement à la réalisation de l'étape a, on procède à un traitement mécanique de la feuille de métal de manière à créer des aspérités de surface sur les faces destinées à recevoir la nappe de renfort complexe ou la couche de matériau thermoplastique ou thermodurcissable.

## Patentansprüche

1. Verfahren zur Herstellung eines Hybridstrukturteils (1) eines Kraftfahrzeugs, das die folgenden Schritte umfasst:
- Schritt a: Formen einer Lage aus metallischem Material, um ein Metallstücks (2) zu bilden,
- Schritt b: Verbinden eines oder mehrerer Verstärkungsstreifen (3), die aus in einer Polymermatrix eingebetteten Endlosfasern gebildet sind, mit einer Verbundlage (4), die aus in einer thermoplastischen Polymermatrix imprägnierten Fasern gebildet ist, um eine komplexe Verstärkungslage (5) zu erzeugen,
- Schritt c: Legen des Metallstücks (2) und der komplexen Verstärkungslage (5) in eine Form (10), wobei die komplexe Verstärkungslage (5) so angeordnet wird, dass die Verbundlage (4) so angeordnet ist, dass sie mit einer der Seiten (23, 24) des Metallstücks (2) in Kontakt kommt.
- Schritt d: Schließen der Form, um die komplexe Verstärkung (5) durch Prägen zu formen und an der genannten Seite des Metallstücks (2) haften zu lassen,
**dadurch gekennzeichnet, dass** das Verfahren derart ist, dass in den Schritten c und d Nadeln verwendet werden, die sinnvoll auf einem Greif- und Laderoboter sowie in der Form angeordnet sind und die die von den Verstärkungsstreifen (3) und der Verbundlage (4) gebildeten Schichten durchdringen.

2. Herstellungsverfahren nach Anspruch 1, bei dem die Polymermatrizen der Verbundlage (4) und der Verstärkungsstreifen (3) kompatible thermoplastische Materialien sind, und bei dem in Schritt b die Oberfläche der Verbundlage (4) auf eine Temperatur nahe der Schmelztemperatur des thermoplastischen Materials und die Oberfläche der Verstärkungsstreifen (3) auf eine Temperatur nahe der Schmelztemperatur der die Fasern umhüllenden Polymermatrix erhitzt wird, so dass die Verbundlage (4) und die Verstärkungsstreifen (3) durch Schweißen miteinander verbunden werden.

3. Herstellungsverfahren nach Anspruch 1, bei dem in Schritt b die Verstärkungsstreifen (3) mit der Verbundlage (4) durch mechanische Mittel wie Nadeln (101b), Klammern oder durch lokale Verformung der Bahn fest verbunden werden.

4. Herstellungsverfahren nach einem der Ansprüche 1 bis 3, bei dem in Schritt c die komplexe Verstärkungslage (5) auf eine Temperatur oberhalb der Glasübergangstemperatur Tg und nahe der Schmelztemperatur der Polymermatrix der Verbundlage (4) erhitzt wird.

5. Herstellungsverfahren nach einem der Ansprüche 1 bis 4, bei dem in Schritt c das Metallstück (2) auf eine Temperatur nahe der Formtemperatur zwischen 70°C und 160°C und vorzugsweise zwischen 80°C und 140°C gebracht wird.

6. Herstellungsverfahren nach einem der Ansprüche 1 bis 5, wobei der Verstärkungsstreifen (3) unidirektionale Endlosfasern aufweist.

7. Herstellungsverfahren nach Anspruch 6, bei dem die Fasern des Verstärkungsstreifens gewebt werden.

8. Herstellungsverfahren nach einem der Ansprüche 1 bis 7, bei dem Verstärkungsstreifen (3) teilweise oder vollständig übereinandergelegt werden.

9. Herstellungsverfahren nach einem der Ansprüche 1 bis 8, wobei die Verbundlage (4) gewebte Endlosfasern aufweist.

10. Herstellungsverfahren nach einem der Ansprüche 1 bis 8, wobei die Verbundlage (4) nicht gewebte, ineinander verschlungene Kurzfasern aufweist.

11. Herstellungsverfahren nach einem der Ansprüche 7 bis 10, wobei die Fasern aus Glasfasern, Kohlenstofffasern, Basaltfasern, Metallfasern oder auch Aramidfasern ausgewählt werden.

12. Herstellungsverfahren nach einem der Ansprüche 1 bis 11, bei dem am Ende von Schritt d ein Schritt e durchgeführt wird, bei dem ein thermoplastisches oder duroplastisches Material (6) durch Spritzgießen oder durch Thermokompression überformt wird.

13. Herstellungsverfahren nach Anspruch 12, bei dem das thermoplastische oder duroplastische Material (6) auf derselben Seite (23) des Metallstücks (2) umspritzt wird, auf der auch die komplexe Verstärkungslage (5) aufgebracht wurde.

14. Herstellungsverfahren nach Anspruch 12, bei dem das thermoplastische oder duroplastische Material (6) auf der gegenüberliegenden Seite (23) mit der Seite (24) des Stücks umspritzt wird, auf der die komplexe Verstärkungslage (5) aufgebracht wurde.

15. Herstellungsverfahren nach einem der Ansprüche 12 bis 14, bei dem das umspritzte thermoplastische oder duroplastische Material (6) ein mit Stapelfasern gefülltes Material ist.

16. Herstellungsverfahren nach einem der Ansprüche 12 bis 15, bei dem das thermoplastische oder duroplastische Material (6), das auf eine der Seiten (23) des Metallstücks (2) aufgegossen wird, Verstärkungsrippen (61) bildet.

17. Herstellungsverfahren nach einem der Ansprüche 1 bis 16, bei dem vor der Durchführung von Schritt c die Seite des Metallstücks (2), die dazu bestimmt ist, die komplexe Verstärkungslage (5) aufzunehmen, mit einer Verbindungsschicht (7) bedeckt wird.

18. Herstellungsverfahren nach einem der Ansprüche 12 bis 17, bei dem vor der Durchführung des Schritts c die Seite des Metallstücks (2), die dazu bestimmt ist, die komplexe Verstärkungslage (5) aufzunehmen, und die Seite, die dazu bestimmt ist, die Schicht aus thermoplastischem oder duroplastischem Material (6) aufzunehmen, mit einer Verbindungsschicht (7) bedeckt werden.

19. Herstellungsverfahren nach einem der Ansprüche 1 bis 16, bei dem vor der Durchführung von Schritt a eine mechanische Behandlung des Metallblechs vorgenommen wird, um Oberflächenunebenheiten auf den Seiten zu erzeugen, die zur Aufnahme der komplexen Verstärkungslage oder der Schicht aus thermoplastischem oder duroplastischem Material bestimmt sind.

## Claims

1. Method for manufacturing a hybrid structural part (1) of a motor vehicle comprising the steps during which:
- step a: a sheet of metal material is shaped to form a metal part (2),
- step b: fastening of one or more reinforcement strips (3) formed of continuous fibers coated in a polymer matrix with a composite sheet (4) formed of fibers impregnated in a thermoplastic polymer matrix, to create a complex reinforcement sheet (5),
- step c: The metal part (2) and the complex reinforcement sheet (5) are placed in a mold (10), arranging the complex reinforcement sheet (5) so that the composite sheet (4) is arranged to come into contact with one of the faces (23, 24) of the metal part (2).
- step d: the mold is closed to conform by stamping and adhere the complex reinforcement sheet (5) on said face of the metal part (2),
**Characterized in that** the method is such that it consists in using, during steps c and d, needles judiciously arranged on a gripping and loading robot as well as in the mold, and which pass through the layers formed by the reinforcement strips 3 and the composite sheet 4.

2. Manufacturing method according to claim 1, wherein the polymer matrices of the composite sheet (4) and reinforcement strips (3) are compatible thermoplastic materials, and wherein in step b, the surface of said composite sheet (4) is brought to a temperature close to the melting temperature of the thermoplastic material, and the surface of the reinforcing strips (3) at a temperature close to the melting temperature of the polymer matrix coating the fibers, so that the composite sheet (4) and the reinforcing strips (3) are bonded by welding.

3. Manufacturing method according to claim 1, wherein, in step b, the reinforcement strips (3) are fastened to the composite sheet (4) by mechanical means such as needles (101b), staples, or by localized deformation of the sheet.

4. Manufacturing method according to any one of claims 1 to 3, wherein, during step c, said complex reinforcement sheet (5) is brought to a temperature higher than the glass transition temperature Tg and close to the melting temperature of the polymer matrix of the composite sheet (4).

5. Manufacturing method according to any one of claims 1 to 4, wherein, during step c, the metal part (2) is brought to a temperature close to the temperature of the mold between 70 ° C and 160 ° C and preferably between 80 ° C and 140 ° C.

6. Manufacturing method according to any one of claims 1 to 5, wherein the reinforcement strip (3) comprises unidirectional continuous fibers.

7. Manufacturing method according to claim 6, wherein the fibers of the reinforcement strip are woven.

8. Manufacturing method according to any one of claims 1 to 7, wherein reinforcement strips (3) are partially or entirely superimposed on each other.

9. Manufacturing method according to any one of claims 1 to 8, wherein the composite web (4) comprises woven continuous fibers.

10. Manufacturing method according to any one of claims 1 to 8, wherein the composite sheet (4) comprises short intermingled non-woven fibers.

11. Manufacturing process according to any one of claims 7 to 10, wherein, said fibers are selected from glass fibers, carbon fibers, basalt fibers, metal fibers or aramid fibers.

12. Manufacturing method according to any one of claims 1 to 11, wherein at the end of step d, step e is carried out, during which is overmolded by injection, or by thermocompression a thermoplastic or thermosetting material (6).

13. Manufacturing method according to claim 12 wherein the thermoplastic or thermosetting material (6) is overmolded on the same side (23) of the metal part (2) as that on which the complex reinforcement sheet (5) has been deposited.

14. Manufacturing method according to claim 12, wherein the thermoplastic or thermosetting material (6) is overmolded on the opposite side (23) to the face (24) of the part on which the complex reinforcement sheet (5) has been deposited.

15. Manufacturing method according to any one of claims 12 to 14, wherein the thermoplastic or thermosetting material (6) overmolded is a material loaded with cut fibers.

16. Manufacturing method according to any one of claims 12 to 15, wherein the thermoplastic or thermosetting material (6) overmolded on one of the faces (23) of the metal part (2) forms reinforcement ribs (61).

17. Manufacturing method according to any one of claims 1 to 16, wherein, prior to carrying out step c, the face of the metal part (2) for receiving the complex reinforcement sheet (5) is covered with a connecting layer (7).

18. Manufacturing method according to any one of claims 12 to 17, wherein, prior to carrying out step c, the face of the metal part (2) for receiving the complex reinforcement sheet (5), and the face for receiving the thermoplastic or thermosetting material layer (6), are covered with a bonding layer (7).

19. Manufacturing method according to one of claims 1 to 16, wherein, prior to carrying out step a, a mechanical treatment of the metal sheet is carried out so as to create surface roughness on the faces intended to receive the complex reinforcing sheet or the layer of thermoplastic or thermosetting material.
